# EUROPEAN PATENT SPECIFICATION

(11) **EP 3 417 714 B1**
(45) Date of publication and mention of the grant of the patent: **19.06.2019**
(21) Application number: 18185613.9
(22) Date of filing: 21.12.2010
(51) Int. Cl.: A23G 3/50, A23G 3/54, A23G 1/54, A23L 5/00, A23L 29/25, A23L 29/30

(54) **PARTICULATE COATING COMPOSITIONS, COATED CONFECTIONERY, AND METHODS OF MAKING THE SAME**
PARTIKELBESCHICHTUNGSZUSAMMENSETZUNG, BESCHICHTETE SÜSSWARE UND VERFAHREN ZU DEREN HERSTELLUNG
COMPOSITIONS DE REVÊTEMENT PARTICULAIRE, PRODUIT DE CONFISERIE ENROBÉ ET PROCÉDÉS DE FABRICATION ASSOCIÉS

(30) Priority: 21.12.2009 US 28840509 P
(43) Date of publication of application: 26.12.2018
(62) Divisional of application: 10842697.4
(73) Proprietor: Intercontinental Great Brands LLC, East Hanover, NJ 07936 (US); Kent Gida Maddeleri Sanayii Ve Ticaret Anonim Sirketi, 41400 Kocaeli (TR)
(72) Inventor: ELEJALDE, Cesar Carlos, Randolph, NJ New Jersey 07869 (US); TAHINCIOGLU, Edip, 34742 Kozyatagi-Istanbul (TR); LEVI, Albert, 41400 Gebze Kocaeli (TR); BAKKAL, Burcu Birecik, East Hanover, NJ 07936 (US)
(74) Representative: Appleyard Lees IP LLP

(56) References cited:
- EP-A2- 0 415 656
- WO-A1-2009/135100
- US-A1- 2009 142 444
- US-B2- 7 115 288

## Description

### FIELD

This disclosure generally relates to particulate coating compositions and products containing the same. More particularly, the disclosure relates to confectionery compositions that include particulate coating compositions.

### BACKGROUND

Coatings are included on confectionery compositions for a variety of purposes including providing a color or texture, for providing a flavor, for protection of the core, and the like.

Coatings can be provided as smooth, uniform layers such hard panned coatings or soft coatings. Other known coatings include particulate coatings such as the so-called "sanded" products. A draw back of many coatings is that it can obscure the underlying color and structure of the confectionery core such that the consumer only perceives the coating.

Furthermore, many types of confectionery, such as chewing gum, toffee, and caramel, have surfaces that are sticky, thus requiring special packaging to prevent the individual pieces from adhering to one anther. Such packaging may include piece wrap, thereby making the production process more time consuming and expensive.

There remains a need in the art for particulate coatings that are translucent to allow underlying core structure and color to be perceived. There also remains a need in the art for a coating which prevents the individual confectionery units from sticking to one another without the need for special packaging.

### SUMMARY

In one embodiment, a coated confectionery composition comprises a confectionery core; and a particulate coating composition at least partially surrounding the confectionery core; wherein the particulate coating composition comprises powdered gum arabic.

In one embodiment, a method of making a coated confectionery composition comprises preparing a confectionery core; applying a binder to the surface of the confectionery core; applying a particulate coating composition to at least partially surround the confectionery core to form a coated core, wherein the particulate coating comprises powdered gum arabic; and optionally drying or conditioning the coated core to form a coated confectionery composition.

In another embodiment, a particulate confectionery coating comprises a powdered gum arabic, and optionally further comprising sugar polyol particulates, saccharide sweetener particulates, or a combination thereof.

The above described and other features are exemplified by the following detailed description.

### DETAILED DESCRIPTION

Disclosed herein are particulate coatings comprising powdered gum arabic. The particulate coatings are semi-translucent and allow for any visually distinct feature of the confectionery core to be perceived, thereby enhancing the consuming experience.

The coatings further provide good anti-sticking properties such that the individual confectionery units do not have to be piece wrapped, but rather can be packaged in a container or box without any special packaging precautions with regard to preventing sticking.

The particulate coatings can be used on a wide variety of confectionery including, but not limited to, a chewing gum, a center-filled confectionery, a chewy confectionery, a crunchy confectionery, a low boiled confectionery, a hard boiled confectionery, a fondant, a caramel, a jelly, a gummy, a nougat, an edible film, a nut paste, chocolate, fudge, a combination thereof, and the like.

As used herein, the terms "coating" or "coating region" are used to refer to a region of a material that at least partially surrounds the confectionery core.

As used herein, the terms "surround", "surrounding", "at least partially surrounding", and the like are not limited to encircling. These terms may refer to enclosing or confining on all sides, encircling or enveloping, and are not limited to symmetrical or identical thicknesses.

As used herein, the term "substantially covers" refers to coating compositions that cover more than 50% of the surface area of a confectionery core. In other embodiments, "substantially covers" may refer to coverage that is more than 55%, more than 60%, more than 65%, more than 70%, more than 75%, more than 80%, more than 85%, more than 90%, more than 95%, more than 98%, and more than 99% of the surface are of a confectionery core.

The gum arabic used in the particulate coating is a powdered gum arabic. In one embodiment, the particle size of the gum arabic is about 100 micrometers or less, specifically less than 100 micrometers. The powdered gum arabic can be replaced with a modified starch having similar viscosity as gum arabic at high concentrations as well as good film forming capabilities.

The particulate coatings may comprise, in addition to the powdered gum arabic, sugar polyol particulates or saccharide sweetener particulates, and a combination thereof.

The use of a mixture of gum arabic, or modified starch, and sugar polyol particulates or saccharide sweetener particulates provides a free-flowing dry mix which does not clump or cake thereby providing quick distribution and a uniform coverage of the particulate coating. If the sugar polyol particulates or saccharide sweetener particulates were used alone without the powedered gum arabic, it was found that the surface of the coating was irregular.

The sugar polyol particulates for use in the particulate coating include mannitol, isomalt (hydrogenated isomaltulose), erythritol, galactitol, lactitol, maltitol, polyglycitol, sorbitol, xylitol, and a combination thereof, particularly crystalline sugar polyols. However, for improved anti-tack properties the sugar polyol particulate is chosen from those polyols having low hygroscopicity such as mannitol, maltitol, erythritol, isomalt, and the like, and combinations thereof.

The saccharide particulate for use in the particulate coating can be sucrose (sugar), dextrose, maltose, glucose, fructose (levulose), and a combination thereof, but specifically those saccharides exhibiting low hygroscopicity.

In several embodiments, the particulate for use in the particulate coating is a sugar polyol having a water solubility of less than 50 gm./100 gm. of water at 25°C (e.g., mannitol, isomalt, and the like).

The weight ratio of sugar polyol particulate or saccharide particulate to powdered gum arabic can be about 90:10 to about 50:50, specifically about 80:20 to about 60:40, and more specifically about 75:25 to about 70:30.

In one embodiment, the sugar polyol or saccharide sweetener particulates are present in the particulate coating in an amount of about 60 to about 90wt%, specifically about 65 to about 85wt%, yet more specifically about 70 to about 80wt%, and still yet more specifically about 75wt% based on the total weight of the particulate coating.

In another embodiment, the amount of gum arabic present in the particulate coating is about 10 to about 40 wt%, specifically about 15 to about 35wt%, yet more specifically about 20 to about 30wt%, and still yet more specifically about 25wt% based on the total weight of the particulate coating.

The particle size of the sugar polyol or saccharide particulates can be of any size or can be matched to the particle size of the powdered gum arabic.

In one embodiment, the sugar polyol or saccharide particulates of the particulate coating have a particle size of about 300 to about 1000 micrometers, specifically about 400 to about 900 micrometers, more specifically about 500 to about 800 micrometers, and yet more specifically about 600 to about 700 micrometers.

In another embodiment, the sugar polyol or saccharide particulates of the particulate coating have a particle size of about 10 to about 300 micrometers, specifically about 25 to about 200 micrometers, more specifically about 50 to about 150 micrometers, and yet more specifically about 75 to about 100 micrometers.

In one embodiment, the sugar polyol or saccharide particulates of the particulate coating have a first plurality having a particle size of greater than 300 to about 1000 micrometers, specifically about 400 to about 900 micrometers, more specifically about 500 to about 800 micrometers, and yet more specifically about 600 to about 700 micrometers; and a second plurality having a particle size of about 10 to about 300 micrometers, specifically about 25 to about 200 micrometers, more specifically about 50 to about 150 micrometers, and yet more specifically about 75 to about 100 micrometers. The ratio of first plurality to second plurality can be about 1:10, about 1:9, about 1:8, about 1:7, about 1:6; about 1:5, about 1:4; about 1:3, about 1:2; about 1:1, about 2:1, about 3:1, about 4:1, about 5:1, about 6:1, about 7:1, about 8:1, about 9:1, or about 10:1.

The particulate coating composition may optionally further comprise a food acid or salt thereof, an additional sweetener, a sensate, a flavorant, a flavor modulator or potentiator, a coloring agent, a functional ingredient, or a combination thereof, as is further described herein. In some embodiments, the ingredient is encapsulated or unencapsulated (or "free"). If more than one ingredient is used, the particulate coating may contain any combination of encapsulated or unencapsulated ingredients.

In several embodiments, the food acid or salt thereof, high intensity sweetener, sensate, flavorant, flavor modulator or potentiator, coloring agent, functional ingredient, and combinations thereof may be present in an amount of about 0.05% to about 20% by weight, specifically about 0.1% to about 18%, more specifically about 1% to about 16%, or yet more specifically about 5% to about 15% by weight of the particulate coating composition.

When used, the additional ingredient may be in particulate form and can have a size similar to, or different than, the powdered gum arabic, sugar polyol or saccharide sweetener particulates. In one embodiment, the various components of the particulate coating composition have similar particle sizes such that when they are mixed together, they form a homogeneous blend.

In some embodiments, the particulate coating composition may include a range of particle sizes. Any particle size may be used, depending on the texture and user sensation desired.

In some embodiments, the particulates of the particulate coating, may be sized to a particular size for use in a particulate coating. In some embodiments, the particulate coating includes particles having an average particle size of about 10 to about 1000 micrometers, specifically about 25 to about 800 micrometers, more specifically about 50 to about 500, yet more specifically about 60 to about 420, yet more specifically about 100 to about 250, and still yet more specifically about 150 to about 200 micrometers. A particulate coating composition having a small average particle size (approximately 50 micrometers) will provide a less grainy feel than a coating composition having a larger average particle size (approximately 150 micrometers). In some embodiments, the particulate coating composition may include particles having an average particle size of about 10 to about 60 micrometers, while in other embodiments the coating composition may include particles having an average particle size of about 60 to about 120 micrometers. In still other embodiments, the coating composition may include particles having an average particle size of about 120 to about 200 micrometers. In still other embodiments, the particulate coating composition may include a certain percentage of particles having an average particle size of about 10 about 60 micrometers, a certain percentage of particles having an average particle size of about 60 to about 110 micrometers, and a certain percentage of particles having an average particle size of about 110 to about 200 micrometers. In one embodiment, each range of particle sizes may be present in an amount of about 33% of the coating composition. Also, in some embodiments, particles below a certain size (e.g., 25 micrometers) may be removed. In some embodiments, the particle size distribution may have a narrow range resulting in a sharp distribution. In some embodiments, the particle size distribution may have a wide range resulting in a smooth distribution.

In some embodiments, a particulate coating composition may include a range of particle sizes. For example, a particulate coating composition including 33% of particles from about 10 to about 60 micrometers plus 33% of particles from about 60 to about 110 micrometers plus 33% of particles from 110 micrometers and above.

In some embodiments, the particulate coating on the confectionery core may be continuous or discontinuous. In some embodiments, the particulate coating may completely surround, coat, cover, or enclose a confectionery core. In other embodiments, the particulate coating may only partially surround, coat, cover, or enclose a confectionery core. The confectionery core may optionally be coated with a first non-particulate coating prior to being coated with a second particulate coating.

In some embodiments, the application of a particulate coating to the exterior of a confectionery core may be accomplished by using moisture such as by steam treating the confectionery core and then applying the particulate coating in a tumbling operation. In some embodiments, the application of a particulate coating to the exterior of a confectionery core may be accomplished by wetting the surface of the confectionery piece through the application of a binding liquid (also referred to as binding syrup) prior to application of the particulate coating. The binding liquid used to wet the surface of the confectionery core may be aqueous, non-aqueous, and a combination thereof.

The binding liquid may be any desired aqueous or non-aqueous binder. In one embodiment, the aqueous binding liquid comprises water and a cellulose, a starch, a sweetener such as a sugar polyol, a saccharide, (e.g. maltodextrin, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, and a combination thereof), a gum arabic, or a combination thereof. The binding liquid may further comprise a food acid or salt thereof, an additional sweetener, a sensate, a flavorant, a flavor modulator or potentiator, a coloring agent, a functional ingredient, or a combination thereof.

In another embodiment, an aqueous binding liquid is used which includes dextrin, sugar and water. Other components may be included if desired, including, for example, color and flavors. In one embodiment, the aqueous binding liquid includes about 5% to about 30% dextrin, about 20% to about 60% water, and about 20% to about 60% sugar. Other embodiments may include water-based shellacs, saccharides, hydrocolloids and water. Non-aqueous binding liquid may be used if desired. For instance, non-aqueous binding liquid may include 0-25% water, resins, fats, waxes, liquid oils and a combination thereof. In addition, the non-aqueous binding liquid may include a solvent based shellac. Optionally, a combination of aqueous and non-aqueous solutions may be used in the surface treatment step.

To form a semi-translucent particulate coating, application of the particulate coating is made using a binding liquid having a lower solids content than is typically used in a particulate coating process. The low solids content allows for a thin binder coating layer to be applied which allows for the underlying visual features to be perceived while at the same time providing a unique textural experience with minimum sticking of the confectionery pieces when loose packed in a container.

The components of the binding liquid for the semi-translucent particulate coated confectionery include aqueous and non-aqueous binding liquids having a solids content of about 20 to about 50 wt%, specifically about 25 to about 40 wt%, and yet more specifically about 30 to about 35 wt% based on the total weight of the binding liquid. In one embodiment the binding liquid comprises water, a gum arabic, a sugar polyol, a saccharide sweetener, or a combination thereof. In yet another embodiment, the binding liquid comprises water and gum arabic. In still yet another embodiment, the binding liquid comprises water, gum arabic, dextrin, and maltitol.

The binding liquid optionally further comprises a food acid or salt thereof, an additional sweetener, a sensate, a flavorant, a flavor modulator or potentiator, a coloring agent, a functional ingredient, or a combination thereof.

The particulate coated confectionery composition can comprise the particulate coating in an amount of about 1 to about 20wt%, specifically about 2 to about 18wt%, more specifically about 3 to about 15wt%, and yet more specifically about 5 to about 10wt% based on the total weight of the particulate coated confectionery composition.

The particulate coated confectionery composition can comprise the particulate coating and dried binding syrup in an amount of about 1 to about 20wt%, specifically about 2 to about 18wt%, more specifically about 3 to about 15wt%, yet more specifically about 4 to about 10wt%, and still yet more specifically 5 to about 7wt% based on the total weight of the particulate coated confectionery composition.

In one embodiment, the coated confectionery composition comprising a particulate coating is further processed by polishing with a wax or coated with a glaze. Exemplary waxes and glazes include shellac (confectioner's glaze), mixtures of mineral oil and wax (e.g., carnauba wax, candelilla wax, etc.), mixtures of Lycasin® and maltitol, and the like.

In certain embodiments, the particulate coating is sugarless, that is it contains only sugar polyols, high intensity sweetener, or a combination thereof, and is free of sucrose.

In some embodiments, a moisture resistant barrier layer is provided, which may prevent moisture migration between the core composition and the particulate coating. The barrier layer may be an intrinsic moisture resistant barrier layer or it may be an external moisture resistant barrier layer. The intrinsic moisture resistant barrier layer may include a crystalline form of a saccharide or sugar polyol. In some embodiments, the intrinsic moisture resistant barrier layer is formed when saccharides or sugar polyols in the confectionery core crystallize at the surface of the composition. In some embodiments, the extrinsic moisture barrier layer may include a shellac or other coating surrounding the confectionery core.

In some embodiments, to aid the process of crystallization in the formation of an intrinsic moisture resistant barrier, the amount of crystallizing saccharide or sugar polyol in the confectionery core composition may be increased as compared to confectionery compositions without intrinsic moisture resistant barrier layers.

For example, the amount of sucrose in a chewing gum composition may be increased from 70% glucose to 30% sucrose to 50% glucose to 50% sucrose. This increase in the relative amount of sucrose may aid in the formation of a crystalline sucrose intrinsic moisture resistant barrier layer.

In other embodiments, the process of crystallization may be aided by the application of seed crystals to the surface of the confectionery core composition by nucleating the saccharide or sugar polyol contained in the confectionery composition.

### Methods

In one embodiment, a binding liquid is applied to a surface of a confectionery core; a particulate coating composition is applied to at least partially surround the confectionery core to form a coated core; and the coated core is optionally dried or conditioned to form a particulate coated confectionery.

In one embodiment, a particulate coated confectionery composition is prepared in a batch coating process using equipment and techniques well known to one having ordinary skill in the art. A portion of a binding liquid for the particulate coated confectionery is added on cores as they tumble in a pan followed by the addition of the remaining portion of binding liquid. The tumbling is performed only long enough to provide a uniform coating of binding liquid to the cores. Large particles (e.g. non-pareils) are added first and distributed quickly and uniformly followed by the addition of finer powders, if used. The tumbling is performed for a short time period for maximum adhesion of the particles. Excessive tumbling is avoided to ensure the larger particles remain adhered to the surface of the core. The coated cores are unloaded and dried/conditioned for up to forty-eight hours.

In one embodiment, a particulate coated confectionery is prepared in a continuous process using equipment and techniques well known to one having ordinary skill in the art. In an exemplary embodiment a sanding drum is employed. The coating materials are metered at prescribed rates into tumbling tubes. The first tube is used to apply and distribute the binding liquid. The tube and feed rate is designed to allow enough retention time to complete the distribution on the binding liquid. The wet cores are dropped into a larger diameter tube following the wet tube. In this "dry tube", the dry particulate coating mixture is added and adhered as the cores tumble and advance to the end of the tube. The coated cores are then collected and dried/conditioned for up to forty-eight hours.

In one embodiment, a method of making a coated confectionery composition comprises preparing a confectionery core; applying a binding liquid to the surface of the confectionery core; applying a particulate coating composition to at least partially surround the confectionery core to form a coated core, wherein the particulate coating comprises powdered gum arabic; and optionally drying or conditioning the coated core to form a coated confectionery composition.

In another embodiment, the particulate coating composition comprises a first plurality of larger particle size particulates and a second plurality of smaller particle size particulates, wherein the applying the particulate coating composition comprises applying the first plurality prior to applying the second plurality.

In another embodiment, the method further comprises applying an exterior region onto the surface of the coated core, wherein the exterior region is selected from the group consisting of wax, glaze, shellac, glitter, and combinations thereof.

In the embodiments where the coated confectionery comprising the particulate coating is further processed by polishing with a wax or coated with a glaze a first step optionally involves the removal of residual dust, which can be achieved by blowing air, etc.; optionally applying a primer composition (e.g., a mixture of Lycasin® and maltitol); and applying shellac or confectioner's glaze.

The particulate coated confectionery comprising the particulate coating can be further packaged without piece wrap as the particulate coating provides excellent anti-sticking property.

The particulate coated confectionery can be packaged using techniques and equipment known in the art. For example gum stick packaging, packaging tins, blister trays, and the like can be used. In one embodiment is a packaged product that includes a particulate coated confectionery wherein the package has indicia on an outer surface that is indicative of the product contained in the package.

In some embodiments, preparation of a particulate coated confectionery includes the step of forming a confectionery composition unit; providing a pre-conditioning step such as the application of a binding liquid or steam; applying the particulate coating to the surface of the confectionery unit; forming individual particulate coated confectionery pieces; and packaging the pieces. In other embodiments, preparation of a particulate coated confectionery composition includes the step of forming a confectionery unit; forming individual confectionery pieces; providing a pre-conditioning step; applying the particulate coating to the surface of the piece; and packaging the particulate coated pieces. In yet other embodiments, preparation of a particulate coated confectionery includes the step of forming a confectionery composition unit; providing a pre-conditioning step; forming individual confectionery pieces; applying the particulate coating to the surface of the pieces; and packaging the particulate coated confectionery pieces.

The optional step of forming the confectionery into individual pieces prior to coating may be performed, if desired. Any desired means to form the individual pieces may be used, including, but not limited to extrusion, rolling, scoring, rope cutting, casting, molding, and a combination thereof.

The pre-conditioning step may include the application of a surface treatment. As used herein, a surface treatment application process is the process of increasing adherence to surface, such as by application of heat to the surface, applying an external substance or material to the surface, including, but not limited to applying aqueous binding liquid, non-aqueous binding liquid, moisture treatments, and a combination thereof. By subjecting the surface to a surface treatment application, the surface will adequately allow the particulate coating composition to adhere to the treated surface. As used herein, a "moisture treatment" includes exposing the surface of the confectionery product to an effective amount of water, so as to add a level of adhesion to the surface. Any number of surface treatments may be applied to the confectionery to prepare the surface, including, but not limited to a moisture treatment, an aqueous binding treatment, a non-aqueous binding treatment, and a combination thereof. The surface treatment may be applied to the whole surface of the composition, or it may only be applied to certain surfaces of the composition. In some embodiments, there may be more than one surface preparation treatment applied to the confectionery surface. For example, there may be a first surface treatment followed by a second surface treatment.

In one embodiment, the pre-conditioning step includes applying an aqueous binding liquid or a non-aqueous binding liquid to the desired surface or surfaces of the confectionery. Once the aqueous binding liquid or non-aqueous binding liquid is applied to the desired surface, it may optionally be dried for a sufficient time and temperature. The binding liquid-coated confectionery can be dried for about 1 to about 60 seconds, specifically about 20 to about 40 seconds. The optional drying step aids in removing excess moisture to leave the surface of the confectionery tacky. In some embodiments, it may be desired to skip the optional drying step, leaving more moisture present on the surface of the confectionery. Once the pre-conditioning step has been completed, the step of applying the particulate coating composition to the surface of the treated confectionery may be performed.

The binding liquid may be applied to a surface of the confectionery core by any means desired. For example, the binding liquid may be sprayed onto the surface of the confectionery core. In other embodiments, the binding liquid may be enrobed around the confectionery core, or it may be painted onto the desired surface of the confectionery core using either contact or non-contact methods. In other embodiments, the binding liquid may be applied to the surface of the confectionery core by traditional panning methods. If desired, the binding liquid may be applied to the surface of the confectionery core by dipping the, or by screw conveying the confectionery. If desired, the binding liquid may be applied to one or more surfaces of the composition in a pattern or in other specific locations. Thus, the binding liquid may be applied to the surface to create a symbol, letter, number, design, or any desired pattern. A combination of the aforementioned methods of applying the binding liquid may be applied, if desired.

In other embodiments, the pre-conditioning step may include heating at least one surface of the confectionery core. The step of heating the surface may take place in addition to the application of a binding liquid, or in the absence of the application of a binding liquid. For example, the desired surface or surfaces may first be subjected to heat, and then the step of applying the particulate coating composition to the heated surface may be performed. In other embodiments, a binding liquid may be applied to the desired surface or surfaces, either prior to heating or after heating the surface or surfaces of the confectionery core.

The step of heating at least one surface of the confectionery core may be accomplished by any desired means. For example, the step of heating at least one surface may include extruding the confectionery core via a heated extruder. In some heated extruder embodiments, the heating step can heat the confectionery core surface to temperatures of from about 18° C to about 60° C. In one embodiment, the confectionery core surface is heated to from about 35° C to about 50° C. In another embodiment, the step of heating the surface of the confectionery core includes applying localized heat to the desired surface or surfaces of the confectionery core. Any desired means to apply localized heat to the surface or surfaces of the confectionery may be used. As with the application of binding liquid, heat may be applied in any desired pattern, design, shape, or image. In some localized heating embodiments, the confectionery surface is exposed to temperatures of 70° C to 500° C for a period of 0.1 second to 120 seconds. To avoid excessive melting or deformation of the confectionery core surface, there may be an inverse relationship between the temperature of the heat treatment and the time of exposure such that higher temperatures are used for shorter times.

The particulate coating composition may be applied to the surface or surfaces of the confectionery core after the pre-conditioning has been completed. The particulate coating composition may be applied to the desired surface of the confectionery by any means desired, including panning, dipping, spraying, rolling, brushing, and a combination thereof. Optionally, if desired, after the step of applying the particulate coating composition has been completed, a further step of applying pressure to the particulate coated surface may be used.

### Additional ingredients

A wide variety of one or more additional ingredients can be used in the coating compositions, binding liquids, or confectionary core compositions. Exemplary additional ingredients include food acids, additional sweeteners, high intensity sweeteners, flavor modulators or potentiators, flavors, coloring agents, medicaments, oral care agents, throat care agents, breath fresheners, mineral adjuvants, bulking agents, acidulants, buffering agents, sensates (e.g., warming agents, cooling agents, tingling agents, effervescent agents), thickeners, mouth moisteners, a flavor enhancing composition, antioxidants (e.g., butylated hydroxytoluene (BHT), butylated hydroxyanisole (BHA), or propyl gallate), preservatives, functional ingredients (e.g., a breath freshener, a dental care component, an active, an herbal, an effervescing system, an appetite suppressor, a vitamin, a micronutrient, a mouth moistening component, a throat care component, an energy boosting agent, a concentration boosting agent), a gas, an abrasive, particles of a second confectionery, a combination thereof, and the like. Furthermore, some of these additives can be at least partially encapsulated.

Exemplary food acids and food acid salts include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and a combination thereof, and alkali metal salts thereof (e.g., sodium citrate dihydrate).

In some embodiments, the particulate coating can include an acid blend including two or more acids such as an acid blend of lactic acid, tartaric acid, or fumaric acid. One advantage of an acid blend is that it provides a significantly more tart or sour perception to a consumer as compared to an equivalent amount of citric acid.

A "high intensity sweetener" as used herein means agents having a sweetness greater than the sweetness of sucrose. In some embodiments, a high intensity sweetener has a sweetness that is at least 100 times that of sugar (sucrose) on a per weigth basis, specifically at least 500 times that of sugar on a per weigth basis. In one embodiement the high intensity sweetener is at least 1,000 times that of sugar on a per weigth basis, more specifically at least 5,000 times that of sugar on a per weigth basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, and a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, and a combination thereof;
water-soluble sweeteners derived from naturally occurring water-soluble sweeteners, such as steviosides and stevia derived compounds such as but not limited to steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; 4,6,1',6'-tetradeoxy-sucrose, and a combination thereof;
protein based sweeteners such as thaumaoccous danielli, talin, and a combination thereof; and
amino acid based sweeteners.

The high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, and a combination thereof.

A sweet taste in the confectionery can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In some embodiments, flavor modulators or potentiators are designed to intensify, supplement, modify, or enhance the perception of flavor, sweetness, tartness, umami, kokumi, saltiness and combinations thereof can be included. Thus, the addition of flavor modulators or potentiators can impact the overall taste of the comestible. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs), and a combination thereof. In some embodiments, sugar acids, sodium chloride, potassium chloride, sodium acid sulfate, and a combination thereof are used. In other embodiments, glutamates such as monosodium glutamate, monopotassium glutamate, hydrolyzed vegetable protein, hydrolyzed animal protein, yeast extract, and a combination thereof are included. Further examples include adenosine monophosphate (AMP), glutathione, and nucleotides such as inosine monophosphate, disodium inosinate, xanthosine monophosphate, guanylate monophosphate, and a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, the confectionary core employed, and the strength of flavor desired. Thus, the amount of flavoring can be varied in order to obtain the result desired in the final product and such variations are within the capabilities of those skilled in the art without the need for undue experimentation.

Flavorants (flavor, flavoring agent) that can be used include those artificial or natural flavors known in the art, for example synthetic flavor oils, natural flavoring aromatics and/or oils, oleoresins, extracts derived from plants, leaves, flowers, fruits, and the like, and a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, and a combination thereof. Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form. When used in solid (dry) form, suitable drying means such as spray drying the oil can be used. Alternatively, the flavorant can be encapsulated, absorbed onto water soluble materials by means known in the art, for example cellulose, starch, sugar, maltodextrin, gum arabic, and the like. In some embodiments, the flavorant can be used in physical forms effective to provide an initial burst of flavor or a prolonged sensation of flavor.

Sensate compounds can include cooling agents, warming agents, tingling agents, effervescent agents, and combinations thereof. Coolants are additives that provide a cooling or refreshing effect in the mouth, in the nasal cavity, or on skin. For example, among the useful cooling agents are included menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS5), as well as the substantially pure ethyl ester of N-[[5-methyl-2-(1-methylethyl)cyclohexyl]carbonyl]glycine as disclosed in U.S. Patent No. 7,189760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 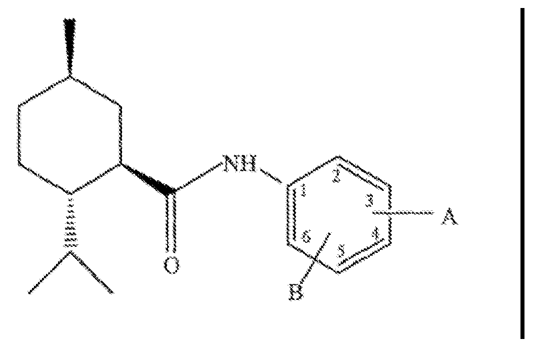 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from H and C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 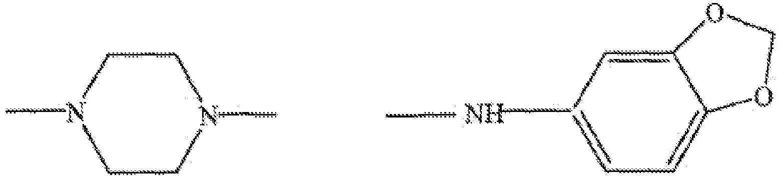 as disclosed in PCT Patent Application WO2006/125334 to Bell et al. which is incorporated in its entirety herein by reference, among others. Other compounds include the alpha-keto enamines disclosed in U.S. Patent Number 6,592,884 to Hofmann et al. which is incorporated in its entirety herein by reference. These and other suitable cooling agents are further described in the following U.S. patents, all of which are incorporated in their entirety by reference hereto: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications, all of which are incorporated in their entirety by reference hereto: U.S. 2005/0222256; 2005/0265930.

Warming components can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso- amylalcohol, benzyl alcohol, glycerine, and a combination thereof.

In some embodiments, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates include those disclosed in U.S. Patent Nos. 6,780,443, 6,159,509, 5,545,424, and 5,407,665, each of which is incorporated by reference herein in its entirety.

Coloring agents (colors, colorants, colorings) can be used in amounts effective to produce a desired color for the confectionery composition. Suitable coloring agents include pigments, which can be incorporated in amounts up to about 6 %w/w of the composition. For example, titanium dioxide can be incorporated in amounts up to about 2 %w/w, and specifically less than about 1 %w/w by weight of the composition. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and a combination thereof. In some embodiments, certified colors can include FD&C aluminum lakes, and a combination thereof. A full recitation of all FD& C colorants and their corresponding chemical structures may be found in the Kirk-Othmer Encyclopedia of Chemical Technology, 4th Edition, in volume 1 at pages 492-494, which text is incorporated herein by reference.

Coloring agents can also include food grade glitter which can be incorporated into the confectionery or is part of the particulate coating. The edible glitter can include a food grade colorant and a carrier such as a sugar, a sugar polyol, a disaccharide, a polysaccharide, a hydrocolloid material, or a combination thereof. Exemplary glitter includes the commercially available Edible Glitter™ from Watson Inc. of West Haven, CT.

The coloring agent can include food grade pearlescent pigments prepared from mica optionally coated with titanium dioxide, iron oxide, and the like.

Exemplary breath fresheners include to zinc citrate, zinc acetate, zinc fluoride, zinc ammonium sulfate, zinc bromide, zinc iodide, zinc chloride, zinc nitrate, zinc fluorosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based material, carbon-based material, enzymes such as laccase, and a combination thereof. Breath fresheners can include essential oils as well as various aldehydes and alcohols. Essential oils used as breath fresheners can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, orange, and a combination thereof. Aldehydes such as cinnamic aldehyde and salicylaldehyde can be used. Additionally, chemicals such as menthol, carvone, iso-garrigol, and anethole can function as breath fresheners.

Exemplary mouth moisteners include saliva stimulators such as acids and salts including acetic acid, adipic acid, ascorbic acid, butyric acid, citric acid, formic acid, fumaric acid, glyconic acid, lactic acid, phosphoric acid, malic acid, oxalic acid, succinic acid, and tartaric acid. Mouth moisteners can include hydrocolloid materials that hydrate and can adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Mouth moisteners can include modified natural gums such as propylene glycol alginate, carboxymethyl locust bean gum, low methoxyl pectin, and a combination thereof. Modified celluloses can be included such as microcrystalline cellulose, carboxymethlcellulose (CMC), methylcellulose (MC), hydroxypropylmethylcellulose (HPCM), hydroxypropylcellulose (MPC), and a combination thereof.

Suitable acidulants illustratively include acetic, citric, fumaric, hydrochloric, lactic and nitric acids as well as sodium citrate, sodium bicarbonate and carbonate, sodium or potassium phosphate and magnesium oxide, potassium metaphosphate, sodium acetate, and a combination thereof.

Exemplary buffering agents include sodium bicarbonate, sodium phosphate, sodium hydroxide, ammonium hydroxide, potassium hydroxide, sodium stannate, triethanolamine, citric acid, hydrochloric acid, sodium citrate, and a combination thereof.

Suitable oral care agents include breath fresheners, tooth whiteners, antimicrobial agents, tooth mineralizers, tooth decay inhibitors, topical anesthetics, mucoprotectants, stain removers, oral cleaning, bleaching agents, desensitizing agents, dental remineralization agents, antibacterial agents, anticaries agents, plaque acid buffering agents, surfactants and anticalculus agents, and a combination thereof.

Throat care or throat-soothing ingredients include analgesics, antihistamines, anesthetics, demulcents, mucolytics, expectorants, antitussive, and antiseptics. In some embodiments, throat soothing agents such as honey, propolis, aloe vera, glycerine, menthol and a combination thereof.

Nonlimiting illustrative categories and specific examples of medicaments include antihistamines, decongestants (sympathomimetics), antitussives (cough suppressants), anti-inflammatories, homeopathic agents, expectorants, anesthetics, demulcents, analgesics, anticholinergics, throat-soothing agents, antibacterial agents, antiviral agents, antifungal agents, antacids, antinauseants, caffeine, chemotherapeutics, diuretics, psychotherapeutic agents, cardiovascular agents, various alkaloids, laxatives, appetite suppressants, ACE-inhibitors, anti-asthmatics, anti-cholesterolemics, anti-depressants, anti-diarrhea preparations, anti-hypertensives, anti-lipid agents, acne drugs, amino acid preparations, anti-uricemic drugs, anabolic preparations, appetite stimulants, bone metabolism regulators, contraceptives, endometriosis management agents, enzymes, erectile dysfunction therapies such as sildenafil citrate, fertility agents, gastrointestinal agents, homeopathic remedies, hormones, motion sickness treatments, muscle relaxants, osteoporosis preparations, oxytocics, parasympatholytics, parasympathomimetics, prostaglandins, respiratory agents, sedatives, smoking cessation aids such as bromocryptine or nicotine, tremor preparations, urinary tract agents, anti-ulcer agents, anti-emetics, hyper- and hypoglycemic agents, thyroid and anti-thyroid preparations, terine relaxants, erythropoietic drugs, mucolytics, DNA and genetic modifying drugs, and nutritional supplements, including nutraceuticals, micronutrients, vitamins and co-enzymes. The pharmaceutically acceptable salts and prodrugs of the medicaments are also included unless specified otherwise. Some of these medicaments can serve more than one purpose. Combinations of the foregoing types of optional medicaments can be used. Two or more medicaments that have activity against the same or different symptoms can be used together in a combination.

### Chewing gum core

In several embodiments, the confectionery core is chewing gum. As used herein, the term "chewing gum" includes a composition comprising an elastomer, optionally present in a chewing gum base, and optionally further comprising water soluble chewing gum ingredients.

As used herein, the terms "bubble gum" and "chewing gum" are used interchangeably and are both meant to include any gum composition.

As used herein, the terms "elastomeric portion" and "gum base" refer to water insoluble material(s) and can include, but is not limited to, elastomers, bulking agents, waxes, elastomer solvents, emulsifiers, plasticizers, fillers, and mixtures thereof.

The chewing gum core generally contains an elastomer. The elastomer may be present in a gum base which may further include a fat, an emulsifier, and optionally an additional gum base ingredient selected from the group consisting of a wax, a filler, an antioxidant, and a combination thereof.

The amount of gum base employed will vary greatly depending upon various factors such as the type of base used, the consistency of the chewing gum desired, and the other components used in the composition to make the final chewing gum core. In general, the gum base will be present in amounts of about 5 wt % to about 60 wt % of the chewing gum core, specifically about 25 wt % to about 50 wt %, more specifically about 30 to about 45%w/w, and yet more specifically about 35 to about 40%w/w of the chewing gum core.

Exemplary elastomers to be used in the chewing gum core include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like. Synthetic elastomers such as butadienestyrene copolymers, polyisobutylene, isobutyleneisoprene copolymers, polyethylene, a combination thereof, and the like are also useful. The gum base can include a non-toxic vinyl polymer, such as polyvinyl acetate and its partial hydrolysate, polyvinyl alcohol, and a combination thereof. When utilized, the molecular weight of the vinyl polymer can range from about 3,000 up to and including about 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

In one embodiment, the elastomer is present in an amount of about 0.2% w/w to about 15%w/w by weight of the chewing gum core specifically about 3.0% w/w to about 8.0%w/w by weight of the gum core.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and a combination thereof.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like can also be incorporated into the gum base to obtain a variety of desirable textures and consistency properties.

When a wax is present in the gum base, it softens the polymeric elastomer mixture and improves the elasticity of the gum base. The waxes employed will have a melting point below about 60° C., and preferably between about 45° C. and about 55° C. The low melting wax can be a paraffin wax. The wax can be present in the gum base in an amount from about 6% to about 10%, and preferably from about 7% to about 9.5%, by weight of the gum base.

In addition to the low melting point waxes, waxes having a higher melting point can be used in the gum base in amounts up to about 5%, by weight of the gum base. Such high melting waxes include beeswax, vegetable wax, candelilla wax, carnauba wax, most petroleum waxes, and the like, and mixtures thereof.

The chewing gum core or gum base can optionally contain conventional elastomer solvents to aid in softening the elastomer base component, for example trepanned resins such as polymers of alpha-pinene or beta-pinene, methyl, glycerol or pentaerythritol esters of rosins or modified rosins and gums, such as hydrogenated, dimerized or polymerized rosins, and combinations comprising at least one of the foregoing resins, the pentaerythritol ester of partially hydrogenated wood or gum rosin, the pentaerythritol ester of wood or gum rosin, the glycerol ester of wood rosin, the glycerol ester of partially dimerized wood or gum rosin, the glycerol ester of polymerized wood or gum rosin, the glycerol ester of tall oil rosin, the glycerol ester of wood or gum rosin, the partially hydrogenated wood or gum rosin, the partially hydrogenated methyl ester of wood or rosin, and the like. The elastomer solvent can be used in amounts of about 5 wt % to about 75 wt %, of the gum base, and specifically about 45 wt % to about 70 wt % of the gum base.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, which can serve as fillers and textural agents. These fillers or adjuvants can be used in the gum base in various amounts. Specifically the amount of filler, when used, will be present in an amount of greater than about 0 wt % to about 60 wt % of the gum base, and more specifically from about 20 wt % to about 30 wt % of the gum base.

Suitable emulsifiers include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, and a combination thereof.

Additional components of the chewing gum core include a bulk sweetener, a softener system, a food acid, and a combination thereof. The chewing gum core may further comprise an ingredient selected from the group consisting of a high intensity sweetener, a sensate, a flavor, a color, a functional ingredient, an antioxidant, and a combination thereof.

The bulk sweetener for use in the chewing gum core can include sugar sweeteners, sugarless sweeteners, and a combination thereof. Sugar sweeteners generally include saccharides. Suitable sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, and a combination thereof.

The sugarless sweetener can be a sugar polyol as previously discussed above, specifically erythritol, galactitol, hydrogenated isomaltulose (isomalt), a hydrogenated starch hydrolysate, lactitol, maltitol, mannitol, polyglycitol, sorbitol, xylitol, and a combination thereof.

The bulk sweetener can be present in the chewing gum core in an amount of about 40 to about 60%w/w of the chewing gum core, specifically about 45 to about 55%w/w of the chewing gum core, and yet more specifically about 48 to about 53%w/w.

In one embodiment, the bulk sweetener is a sugar polyol selected from the group consisting of maltitol, sorbitol, and a combination thereof. The maltitol or sorbitol can be in powdered form. In a further embodiment, the bulk sweetener comprises a ratio of about 1:3 to about 1:5 sorbitol to maltitol, specifically about 1:3.5 to about 1:4.5, and more specifically about 1:4 sorbitol to maltitol.

The chewing gum can further include a softener. Exemplary softeners include lanolin, palmitic acid, oleic acid, stearic acid, sodium stearate, potassium stearate, glyceryl triacetate, lecithin, glyceryl lecithin, glyceryl monostearate, propylene glycol monostearate, an acetylated monoglyceride, glycerine, a natural or synthetic wax, a hydrogenated vegetable oil, sorbitan monostearate, tallow, propylene glycol, and a combination thereof, specifically an acetylated monoglyceride, lecithin, glycerine, a hydrogenated starch hydrolysate (e.g., Lycasin 80/55), and a combination thereof.

The softener can be present in the chewing gum core in an amount of about 1 to about 5 %w/w of the chewing gum core, specifically about 1.5 to about 4 %w/w, and more specifically about 2 to about 3 %w/w of the chewing gum core.

The food acid suitable for use in the chewing gum core include those previously discussed, such as acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and a combination thereof, specifically citric acid, malic acid, and a combination thereof.

The food acid can be present in the chewing gum core in an amount of about 0.01 to about 2.0 %w/w of the core, specifically about 0.1 to about 1.5 %w/w, and more specifically about 0.3 to about 1.0 %w/w of the core.

The chewing gum core may further include a high intensity sweetener such as those previously discussed. Specific high intensity sweeteners for use in the chewing gum core include aspartame, neotame, sucralose, monatin, acesulfame potassium, an encapsulated form of the high intensity sweetener, and a combination thereof.

The amount of high intensity sweetener present in the chewing gum core can be about 2 to about 6 % w/w of the chewing gum core, specifically about 3 to about 5 % w/w of the chewing gum core.

The chewing gum core can further include a sensate selected from the group consisting of a cooling agent, a warming agent, a tingling agent, and a combination thereof. Exemplary sensates have been previously discussed above.

The amount of flavor, sensate, and combination thereof present in the chewing gum core can be up to about 5.0 %w/w based on the total weight of the chewing gum core, specifically about 1.0 to about 4.0 %w/w, and more specifically about 2.0 to about 3.0%w/w.

The chewing gum core can further include a functional ingredient such as a breath freshener, a dental care component, an active, an herbal, an effervescing system, an appetite suppressor, a vitamin, a micronutrient, a mouth moistening component, a throat care component, an energy boosting agent, a concentration boosting agent, and a combination thereof. The functional ingredients for use in the chewing gum core include those previously discussed above.

The chewing gum cores can be prepared using standard techniques and equipment. In one exemplary process, a gum base is heated to a temperature sufficiently high to soften the base without adversely effecting the physical and chemical make up of the base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the base such as the plasticizer, fillers, the bulking agent or sweeteners, the softener and coloring agents to plasticize the blend as well as to modulate the hardness, viscoelasticity and formability of the base, and the flavor enhancing composition (as a concentrate with other additives or separately). Mixing is continued until a uniform mixture of the gum composition is obtained. Thereafter the gum composition mixture can be formed into a desired shape.

The chewing gum cores may be provided in a variety of different forms, such as, for example, slab, pellet, sticks, balls, cubes, center-fill gums, candy gum, multi-region gum, multi-layer gum, bubble gum, deposited gums and compressed gums.

The chewing gum core can be prepared using a batch method or a continuous method and a combination thereof.

As used herein, "a continuous mixer" is processing equipment in which the various ingredients used to prepare a composition are fed substantially continuously into the device whilst those ingredients are being mixed and removed or ejected from the mixing apparatus. For example, in a continuous mixing extruder, some ingredients are substantially continuously introduced through various feed ports while others are introduced downstream, all the while the screws, blades or other mixing elements continuing to convey the mixture through the apparatus, all the while mixing the same. At a downstream portion of the extruder, the wholly or partly combined mass is ejected from the extruder by the force of the mass continually being conveyed and/or facilitated by an external pump.

### Other confectionery core

In some embodiments, the confectionery core is a chewable confectionery including gummy candy or "gummi" confectionery. The chewable confectionery may include soft candies such as, but not limited to, gum drops, licorice, fruit snacks, starch based jellies, gelatin based jellies, pectin based jellies, carageenan based jellies, agar based jellies, konjac based jellies, starch candy, nougat, toffee, taffy, marshmallow, fondant, fudge, chocolate, marzipan, and jelly beans. The chewable confectionery may also include harder candies such as, but not limited to, compressed tablets, hard boiled candy, nut brittles, pastilles, pralines, dragees, and lozenges. The base of the chewable confectionery may be a sugar/glucose syrup combination or a polyol/polyol syrup combination and a gelatinizing agent, the latter of which may be gelatin, agar, gum arabic, maltodextrin, pectin, modified starches and combinations thereof. Various other gums (also referred to as hydrocolloids) may also be used. The gelatinizing material may be desirably dissolved in water or otherwise hydrated prior to mixing with the sugar/glucose syrup combination. If a hydrocolloid such as pectin is used as the gelatinizing agent, then the pectin is desirably dry mixed with a portion of the sugar or bulk sweetener prior to addition of the dry mixture to water.

In general, preparation of a hard candy involves: mixing and heating, forming a melt a sugar polyol and optionally, other sugar polyols and/or a diluent such as water; cooking the melt; removing excess moisture from the melt; cooling the melt with mixing until the melt is a plastic-like, workable mass; while the melt is a plastic-like mass, incorporating optional ingredients; and forming the plastic-like mixture into a desired size and shape.

Methods known in the art of making hard confectionaries include those utilizing fire cookers, vacuum cookers, and scraped-surface cookers (aka high speed atmospheric cookers). In a suitable example of a method utilizing fire cookers, the desired quantity of the sugar polyol is dissolved in water by heating in a kettle until dissolved. Additional optional sugar polyols can be added and cooking continued until a final temperature of about 145-165° C. is achieved. The mix is then cooled, worked as a plastic-like mass, and admixed optional ingredients such as flavors, colorants, high-intensity sweeteners, and the like.

A suitable example of a method utilizing vacuum cookers, the sugar polyol components are boiled at a temperature of about 125-132° C., vacuum is applied and additional water is boiled off without extra heating. When cooking is complete, the mass is a semi-solid having a plastic-like consistency. Optional conventional additives are admixed into the mass at this point by conventional methods.

In a suitable example of a method using scraped-surface cookers, a film of a mixture of the sugar polyol components is spread on a heat exchange surface and heated to about 165-170° C. within a few minutes. The composition is then rapidly cooled to about 100-120° C. and worked as a plastic-like mass, mixing in any optional conventional additives.

In the foregoing methods, the cooking temperature should be sufficiently high to drive water from the mix. Where vacuum is employed, lower temperatures can typically be used. In the foregoing methods, the additive(s) are specifically mixed for a time effective to provide a uniform distribution of the materials, for example about 4 to about 10 minutes. Once the composition has been properly tempered, it can be cut into workable portions or otherwise formed into desired shapes and sizes using forming techniques such as are known in the art.

### Center-fill confectionery

In some embodiments, the confectionery core is a center-fill chewing gum or center-fill confectionery composition. The center-fill chewing gum composition may include a center-fill composition and a chewing gum region. The center-fill confectionery composition may include a center-fill composition and a confectionery region. The center-fill composition may include any conventional filling or combination of filling materials. The center-fill may be sugar or sugar-free and it may contain fat or be fat-free. Additionally, the center-fill may contain vegetable-based, dairy-based or fruit-based materials such as, but not limited to, fruit juices, fruit concentrates, fruit purees, dried fruit materials, and the like. Further, in some embodiments, the center-fill component may include one or more sweeteners or additional ingredients such as those discussed above. The center-fill may also include one or more hydrocolloid materials.

In some embodiments, the appearance of the center-fill is the same as the appearance of the chewing gum or confectionery composition. In other embodiments, the appearance of the center-fill is different than the appearance of the chewing gum or confectionery composition.

In some embodiments, center-fill chewing gum embodiments may include a center-fill region, which may be a liquid or powder or other solid, or gas, and a gum region. Center-fill chewing gums and methods of preparing same are more fully described in assignee's co-pending U.S. Patent Application Publication Nos. 2006-0051456 and 2006-0045934, both to Kabse et al., and both entitled "Liquid-Filled Chewing Gum Composition," the contents both of which are incorporated herein by reference.

The center-fill gum composition and other compositions described herein may be formed by any technique known in the art which includes the method described by U.S. Patent No. 6,280,780 to Degady et al. which is herein incorporated by reference in its entirety. Degady describes an apparatus and method for forming center-filled gum pellets. The method includes first extruding a liquid-filled rope of a chewing gum layer and passing the rope through a sizing mechanism including a series of pairs of pulley-shaped roller members. The roller members "size" the rope or strand of gum material such that it leaves the series of rollers with the desired size and shape for entering a tablet-forming mechanism.

The features and advantages are more fully shown by the following examples which are provided for purposes of illustration, and are not to be construed as limiting the invention in any way.

### EXAMPLES

### Example 1: Particulate coated chewing gum compositions

Chewing gum cores are surface treated with a particulate coating composition which provides good anti-stick properties while at the same time being semi-translucent to allow for the surface of the core structure and color to be visually perceived by the consumer.

| | **Ex. 1A** | | **Ex. 1B** | | **Ex. 1C** | | **Ex. 1D** | | **Ex. 1E** | |
|---|---|---|---|---|---|---|---|---|---|---|
| | **Kg** | **%** | **Kg** | **%** | **gr** | **%** | **Kg** | **%** | **gr** | **%** |
| Chewing gum Cores | 40.00 | 90.7% | 100.0 | 93.28 % | 1,000 | 92.81 % | 100.0 | 93.28 % | 1,000 | 92.81 % |
| Sanding/Panni ng Syrup | 0.50 | 1.13% | 1.20 | 1.12% | 12.50 | 1.16% | 1.20 | 1.12% | 12.50 | 1.16% |
| Sanding Mix (dried) | 2.60 | 5.90% | 6.00 | 5.60% | 30.00 | 2.78% | 6.00 | 5.60% | 30.00 | 2.78% |
| Other powder or granules | 1.00 | 2.27% | 0.00 | 0.00% | 35.00 | 3.25% | 0.00 | 0.00% | 35.00 | 3.25% |
| **TOTAL** | 44.10 | 100% | 107.2 | 100% | 1,077. 5 | 100% | 107.2 | 100% | 1,077. 5 | 100% |
| | | | | | | | | | | |

| **Binding liquid** | | | | | | | | | | |
|---|---|---|---|---|---|---|---|---|---|---|
| Gum Arabic | 0.15 | 30.0% | 0.36 | 30.0% | 1.25 | 10.0% | 0.36 | 30.0% | 1.25 | 10.0% |
| Water | 0.35 | 70.0% | 0.84 | 70.0% | 4.38 | 35.0% | 0.84 | 70.0% | 4.38 | 35.0% |
| Maltitol | 0.00 | 0.00% | 0.00 | 0.00% | 4.38 | 35.0% | 0.00 | 0.00% | 4.38 | 35.0% |
| Sugar | 0.00 | 0.00% | 0.00 | 0.00% | 0.00 | 0.00% | 0.00 | 0.00% | 0.00 | 0.00% |
| Corn Syrup | 0.00 | 0.00% | 0.00 | 0.00% | 0.00 | 0.00% | 0.00 | 0.00% | 0.00 | 0.00% |
| Dextrin | 0.00 | 0.00% | 0.00 | 0.00% | 2.50 | 20.0% | 0.00 | 0.00% | 2.50 | 20.0% |
| TOTAL | 0.50 | 100% | 1.20 | 100% | 12.50 | 100% | 1.20 | 100% | 12.50 | 100% |
| Solution Solids | | 30.0% | | 30.0% | | 65.0% | | 30.0% | | 65.0% |

| (%) | | | | | | | | | | |
|---|---|---|---|---|---|---|---|---|---|---|
| | | | | | | | | | | |

| **Sanding Mix (dries)** | | | | | | | | | | |
|---|---|---|---|---|---|---|---|---|---|---|
| Mannitol | 1.95 | 75.0% | 4.5 | 75.0% | 22.50 | 75.0% | 0.00 | 0.00% | 15.0 | 50.0% |
| Isomalt | 0.00 | 0.00% | 0.00 | 0.00% | 0.00 | 0.00% | 4.5 | 75.0% | 7.50 | 25.0% |
| Gum Arabic | 0.65 | 25.0% | 1.5 | 25.0% | 7.50 | 25.0% | 1.5 | 25.0% | 7.50 | 25.0% |
| TOTAL | 2.60 | 100% | 6 | 100% | 30.00 | 100% | 6 | 100% | 30.00 | 100% |
| | | | | | | | | | | |

| **Other powder or granules** | | | | | | | | | | |
|---|---|---|---|---|---|---|---|---|---|---|
| P35SK or P90 or P200 Maltitol | 0.00 | 0.00% | 0.00 | 0.00% | 5.00 | 14.3% | 0.00 | 0.00% | 5.00 | 14.3% |
| Fine Granulated Polyol | 1.00 | 100% | 0.00 | 0.00% | 30.00 | 85.7% | 0.00 | 0.00% | 30.00 | 85.7% |
| TOTAL | 1.00 | 100% | 0.00 | 0.00% | 35.00 | 100% | 0.00 | 0.00% | 35.00 | 100% |

Examples 7A-7E are prepared in a manual pan batch coating process. Approximately 50 to 60% of the binding liquid is added on the chewing gum cores as they tumble in the pan. Distribution is allowed for 1 minute, before the rest of the binding liquid is added. After 30 seconds, the cores are uniformly covered with binding liquid.

Large particles (e.g. non-pareils) are added first and distributed quickly and uniformly followed by the addition of finer powders if used. The tumbling is performed for about 4 minutes, but no more than what is required for maximum adhesion of the particles. Excessive tumbling may cause the larger particles to fall off. Once no more powder is absorbed by the wet core, the pan is unloaded.

Instead of a manual pan batch process, a continuous process such as the use of a sanding drum can be employed. In a continuous process, the materials are metered at the prescribed rates into tumbling tubes. The first tube is used to apply and distribute the binding liquid. The tube and feed rate is designed to allow enough retention time to complete the distribution on the binding liquid. The wet cores are dropped into a larger diameter tube following the wet tube. In this "dry tube", the dry sanding mix is added and adhered as the cores tumble and advance to the end of the tube. The coated cores are then collected in trays and placed in environmentally controlled chambers to ensure the product dries, and the coating solidifies. The conditioning process lasts 24 to 48 hours.

### Example 2: Particulate coated center-fill chewing gum compositions

Liquid center-fill chewing gum cores prepared by the processes described in U.S. Patent Application Publication Nos. 2006-0051456 and 2006-0045934, both to Kabse et al., are coated with the particulate coating compositions of Example 1.

### Example 3: Particulate coated pressed mint compositions

Pressed mint cores prepared by the processes described in U.S. Patent Application Publication No. 2009-0311369 to Harvey et al. and U.S. Patent No. 7,041,277 to Holme et al., both of which are incorporated herein in their entirety, are coated with the particulate coating compositions of Example 1.

### Example 4: Particulate coated gummy compositions

Uncoated gummy compositions prepared according to U.S. Patent Application Publication No. 2006-0286284 to Mistry et al., the relevant sections of which are incorporated herein, are coated with the particulate coating compositions of Example 1.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "combination" is inclusive of a homogenous or non-homogenous blend, mixture, or alloy of the named components into an integrated whole. The term "homogenous" refers to a uniform blend of the components. The word "or" means "and/or."

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A coated confectionery composition comprising:
a confectionery core; and
a particulate coating composition at least partially surrounding the confectionery core;
wherein the particulate coating composition comprises powdered gum Arabic
wherein the particulate coating composition further comprises sugar polyol particulates or saccharide sweetener particulates;
wherein the sugar polyol or saccharide sweetener particulates are present in the particulate coating in an amount of 60 to 85wt% and the amount of gum arabic is 40 to 15 wt%, both weight percentages based on the total weight of the particulate coating.

2. The coated confectionery of claim 1, wherein the sugar polyol particulates are mannitol, isomalt, erythritol, galactitol, lactitol, maltitol, polyglycitol, sorbitol, xylitol, or a combination thereof

3. The coated confectionery of claim 1, wherein the sugar polyol or saccharide particulates have a particle size of
10 to 300 micrometers;
300 to 1000 micrometers; or
a first plurality of sugar polyol particulates have a particle size of 300 to 1000 micrometers and a second plurality of sugar polyol particulates having a particle size of 10 to 300 micrometers.

4. The coated confectionery of claim 1, wherein the powdered gum arabic has a particle size of less than 100 micrometers.

5. The coated confectionery of claim 1, wherein the particulate coating composition further comprises a food acid or salt thereof, an additional sweetener, a sensate, a flavorant, a flavor modulator or potentiator, a coloring agent, a functional ingredient, or a combination thereof.

6. The coated confectionery of claim 1, wherein the amount of particulate coating is 3 to 15 wt% based on total weight of the coated confectionery.

7. The coated confectionery of claim 1, further comprising an exterior region that is a wax, glaze, shellac, glitter, or a combination thereof.

8. The coated confectionery of claim 1, wherein the confectionery core is a center-filled confectionery, a chewy confectionery, a crunchy confectionery, a low boiled confectionery, a hard boiled confectionery, a fondant, a caramel, a jelly, a gummy, a nougat, an edible film, a nut paste, chocolate, fudge, or a combination thereof.

9. A method of making a coated confectionery composition of any one of claims 1-8, comprising:
preparing a confectionery core;
applying a binder to the surface of the confectionery core;
applying the particulate coating composition to at least partially surround the confectionery core to form a coated core, wherein the particulate coating comprises powdered gum arabic; and
optionally drying or conditioning the coated core to form a coated confectionery composition.

10. The method of making a coated confectionery as in claim 9, further comprising packaging the coated core without piece wrap.

11. The method of making a coated confectionery as in claim 9, comprising applying a first plurality of larger particle size particulates followed by a second plurality of smaller particle size particulates, wherein the first plurality has a particle size of greater than 300 to 1000 micrometers and the second plurality has a particle size of 10 to 300 micrometers.

12. The method of making a coated confectionery as in claim 9, further comprising applying an exterior region that is a wax, glaze, shellac, glitter, or a combination thereof.

## Patentansprüche

1. Beschichtete Süßwarenzusammensetzung, umfassend:
einen Süßwarenkern; und
eine teilchenförmige Beschichtungszusammensetzung, die den Süßwarenkern mindestens teilweise umgibt; wobei die teilchenförmige Beschichtungszusammensetzung pulverförmiges Gummiarabikum umfasst;
wobei die teilchenförmige Beschichtungszusammensetzung ferner Zuckerpolyolteilchen oder Saccharidsüßstoffteilchen umfasst;
wobei die Zuckerpolyol- oder Saccharidsüßstoffteilchen in der teilchenförmigen Beschichtung in einer Menge von 60 bis 85 Gew.-% vorhanden sind und die Menge von Gummiarabikum 40 bis 15 Gew.-% beträgt, wobei beide Gewichtsprozentsätze auf das Gesamtgewicht der teilchenförmigen Beschichtung bezogen sind.

2. Beschichtete Süßware nach Anspruch 1, wobei die Zuckerpolyolteilchen Mannit, Isomalt, Erythrit, Galactit, Lactit, Maltit, Polyglycit, Sorbit, Xylit oder eine Kombination davon sind.

3. Beschichtete Süßware nach Anspruch 1, wobei die Zuckerpolyol- oder Saccharidteilchen eine Teilchengröße von
10 bis 300 Mikrometer;
300 bis 1000 Mikrometer aufweisen; oder
eine erste Vielzahl von Zuckerpolyolteilchen eine Teilchengröße von 300 bis 1000 Mikrometer aufweist und eine zweite Vielzahl von Zuckerpolyolteilchen eine Teilchengröße von 10 bis 300 Mikrometer aufweist.

4. Beschichtete Süßware nach Anspruch 1, wobei das pulverförmige Gummiarabikum eine Teilchengröße von weniger als 100 Mikrometer aufweist.

5. Beschichtete Süßware nach Anspruch 1, wobei die teilchenförmige Beschichtungszusammensetzung ferner eine Nahrungsmittelsäure oder ein Salz davon, einen zusätzlichen Süßstoff, ein Empfindungsmittel, einen Geschmacksstoff, einen Geschmacksmodulator oder -verstärker, einen Farbstoff, einen funktionellen Inhaltsstoff oder eine Kombination davon umfasst.

6. Beschichtete Süßware nach Anspruch 1, wobei die Menge von teilchenförmiger Beschichtung 3 bis 15 Gew.-%, bezogen auf das Gesamtgewicht der beschichteten Süßware, beträgt.

7. Beschichtete Süßware nach Anspruch 1, ferner umfassend einen Außenbereich, der ein Wachs, eine Glasur, Schellack, Glitter oder eine Kombination davon ist.

8. Beschichtete Süßware nach Anspruch 1, wobei der Süßwarenkern eine in der Mitte gefüllte Süßware, ein Kaubonbon, eine knusprige Süßware, eine niedriggegarte Süßware, eine stark gegarte Süßware, ein Fondant, ein Karamell, ein Gelee, ein Gummi, ein Nougat, eine essbare Folie, eine Nusspaste, Schokolade, Toffee oder eine Kombination davon ist.

9. Verfahren zur Herstellung einer beschichteten Süßwarenzusammensetzung nach einem der Ansprüche 1 bis 8, umfassend:
Herstellen eines Süßwarenkerns;
Auftragen eines Bindemittels auf die Oberfläche des Süßwarenkerns;
Auftragen der teilchenförmigen Beschichtungszusammensetzung, die den Süßwarenkern mindestens teilweise umgibt, um einen beschichteten Kern zu bilden, wobei die teilchenförmige Beschichtung pulverförmiges Gummiarabikum umfasst; und
wahlweise Trocknen oder Konditionieren des beschichteten Kerns, um eine beschichtete Süßwarenzusammensetzung zu bilden.

10. Verfahren zum Herstellen einer beschichteten Süßware nach Anspruch 9, ferner umfassend das Verpacken des beschichteten Kerns ohne Stückwicklung.

11. Verfahren zum Herstellen einer beschichteten Süßware nach Anspruch 9, umfassend das Auftragen einer ersten Vielzahl von Teilchen mit größerer Teilchengröße, gefolgt von einer zweiten Vielzahl von Teilchen mit kleinerer Teilchengröße, wobei die erste Vielzahl eine Teilchengröße von mehr als 300 bis 1000 Mikrometer aufweist und die zweite Vielzahl eine Teilchengröße von 10 bis 300 Mikrometer aufweist.

12. Verfahren zum Herstellen einer beschichteten Süßware nach Anspruch 9, ferner umfassend das Auftragen eines Außenbereichs, der ein Wachs, eine Glasur, Schellack, Glitter oder eine Kombination davon ist.

## Revendications

1. Composition de confiserie enrobée comprenant :
un coeur de confiserie ; et
une composition d'enrobage particulaire entourant au moins partiellement le coeur de confiserie ; dans laquelle la composition d'enrobage particulaire comprend de la gomme arabique en poudre
dans laquelle la composition d'enrobage particulaire comprend en outre des matières particulaires de polyol de sucre ou des matières particulaires d'édulcorant saccharide ;
dans laquelle les matières particulaires de polyol de sucre ou d'édulcorant saccharide sont présentes dans l'enrobage particulaire en une quantité de 60 à 85 % en poids et la quantité de gomme arabique est de 40 à 15 % en poids, les deux pourcentages en poids sur la base du poids total de l'enrobage particulaire.

2. Confiserie enrobée selon la revendication 1, dans laquelle les matières particulaires de polyol de sucre sont du mannitol, de l'isomalt, de l'érythritol, du galactitol, du lactitol, du maltitol, du polyglycitol, du sorbitol, du xylitol, ou une combinaison de ceux-ci.

3. Confiserie enrobée selon la revendication 1, dans laquelle les matières particulaires de polyol de sucre ou de saccharide ont une taille de particules de
10 à 300 micromètres ;
300 à 1000 micromètres ; ou
une première pluralité de matières particulaires de polyol de sucre a une taille de particules de 300 à 1000 micromètres et une deuxième pluralité de matières particulaires de polyol de sucre a une taille de particules de 10 à 300 micromètres.

4. Confiserie multicouche selon la revendication 1, dans laquelle la gomme arabique en poudre a une taille de particules inférieure à 100 micromètres.

5. Confiserie enrobée selon la revendication 1, dans laquelle la composition d'enrobage particulaire comprend en outre un acide alimentaire ou un sel de celui-ci, un édulcorant supplémentaire, un agent sensoriel, un aromatisant, un modulateur ou exhausteur de goût, un agent colorant, un ingrédient fonctionnel, ou une combinaison de ceux-ci.

6. Confiserie enrobée selon la revendication 1, dans laquelle la quantité d'enrobage particulaire va de 3 à 15 % en poids sur la base du poids total de la confiserie enrobée.

7. Confiserie enrobée selon la revendication 1, comprenant en outre une région extérieure qui est une cire, un glaçage, une gomme-laque, une poudre scintillante, ou une combinaison de ceux-ci.

8. Confiserie enrobée selon la revendication 1, dans laquelle le coeur de confiserie est une confiserie fourrée au centre, une confiserie à mâcher, une confiserie croustillante, une confiserie faiblement bouillie, une confiserie bouillie dure, un fondant, un caramel, une gelée, une gomme, un nougat, un film comestible, une pâte de noix, du chocolat, du fudge, ou une combinaison de ceux-ci.

9. Procédé de fabrication d'une composition de confiserie enrobée selon l'une quelconque des revendications 1 à 8, comprenant :
la préparation d'un coeur de confiserie ;
l'application d'un liant sur la surface du coeur de confiserie ;
l'application de la composition d'enrobage particulaire pour entourer au moins partiellement le coeur de confiserie pour former un coeur enrobé, dans lequel l'enrobage particulaire comprend de la gomme arabique en poudre ; et
le séchage ou conditionnement éventuel du coeur enrobé pour former une composition de confiserie enrobée.

10. Procédé de fabrication d'une confiserie enrobée selon la revendication 9, comprenant en outre l'emballage du coeur enrobé sans enveloppement à la pièce.

11. Procédé de fabrication d'une confiserie enrobée selon la revendication 9, comprenant l'application d'une première pluralité de matières particulaires à taille de particules plus grande suivie d'une deuxième pluralité de matières particulaires à taille de particules plus petite, dans lequel la première pluralité a une taille de particules supérieure à 300 à 1000 micromètres et la deuxième pluralité a une taille de particules de 10 à 300 micromètres.

12. Procédé de fabrication d'une confiserie enrobée selon la revendication 9, comprenant en outre l'application d'une région extérieure qui est une cire, un glaçage, une gomme-laque, une poudre scintillante, ou une combinaison de ceux-ci.
